# EUROPEAN PATENT APPLICATION

(11) **EP 4 625 625 A1**
(43) Date of publication of application: **01.10.2025**
(21) Application number: 24211190.4
(22) Date of filing: 06.11.2024
(51) Int. Cl.: H01M 10/6556, H01M 10/613, H01M 10/6568, F16L 41/02

(54) **CURRENT COLLECTOR SYSTEM AND LIQUID COOLING SYSTEM**

(30) Priority: 27.03.2024 CN 202420617827 U
(71) Applicant: Eve Energy Co., Ltd., Huizhou Guangdong 516000 (CN)
(72) Inventor: Chen, Shanda, Huizhou, Guangdong, 516000 (CN); Liao, Lie, Huizhou, Guangdong, 516000 (CN)
(74) Representative: Michalski Hüttermann & Partner Patentanwälte mbB

(57) **Abstract**

The present disclosure relates to a current collector system and a liquid colling system, including at least two current collectors. Each of the current collectors includes a current collector housing (1), provided with a liquid cavity (11) for liquid circulation, a side of the liquid cavity (11) being provided with an open current collector connection port (12); a current collector primary flow channel (2), penetrating through the current collector housing (1), in which the current collector primary flow channel (2) of each of the at least two current collectors is connected in series with each other; and a flow hole (3), provided between the liquid cavity (11) and the current collector primary flow channel (2) to allow the current collector primary flow channel (2) to be in communication with the liquid cavity (11). A diameter of the flow hole (3) of each of the at least two current collectors is not equal.

## Description

### TECHNICAL FIELD

The present disclosure relates to the technical field of current collectors, and in particular to a current collector system and a liquid cooling system.

### BACKGROUND

With the rapid development of electronic devices, their heat dissipation problems are becoming more and more prominent, and particularly for battery packs, heat dissipation requirements are becoming more urgent. Liquid cooling technology, as an efficient heat dissipation method, is widely applied in electronic devices. However, flow allocation is an important aspect in the design of liquid cooling systems in battery packs.

The conventional liquid cooling systems are designed to include a liquid cavity, and primary flow channel inlets and outlets for controlling liquid into and out of the liquid cavity. This design regulates the flow allocation to each of the main flow channel inlets and outlets in the liquid cooling system by both diameters and number of the primary flow channels.

### SUMMARY

Firstly, the design of the primary flow channels is complex and needs precise calculation in the diameter and length of each of the primary flow channels to achieve an even flow allocation. This not only increases the design difficulty, but also takes up a relatively large space, which is not conducive to the compact design of the liquid cooling system.

Secondly, the existence of a plurality of branches and pipelines in the primary flow channels makes the structure of the liquid cooling system complex, which increases the difficulty of manufacturing and assembly. In addition, the complex pipelines also increase the risk of cooling liquid leakage, leading to hidden problems for the safety and stability of electronic equipment.

In a first aspect, provided is a current collector system according to the present disclosure, including at least two current collectors. Each of the current collectors includes a current collector housing, provided with a liquid cavity for liquid circulation, a side of the liquid cavity being provided with an open current collector connection port; a current collector primary flow channel, penetrating through the current collector housing, in which the current collector primary flow channel of each of the at least two current collectors is connected in series with each other; and
a flow hole, provided between the liquid cavity and the current collector primary flow channel to allow the current collector primary flow channel to be in communication with the liquid cavity. A diameter of the flow hole of each of the at least two current collectors is not equal.

In a second aspect, further provided is a liquid cooling system according to the present disclosure, including a liquid cooling main inlet pipe, a liquid cooling main outlet pipe, one or more liquid cooling plates and a current collector system. The liquid cooling plates are stacked in sequence and spaced apart, each of two ends of the liquid cooling plates is in sealed connection with the current collector connection port of one of the current collectors, the liquid cooling main inlet pipe is connected to the current collector primary flow channel at an end of the one or more liquid cooling plates stacked, and the liquid cooling main outlet pipe is connected to the current collector primary flow channel at another end of the one or more liquid cooling plates stacked. When one of the current collectors is further away from the liquid cooling main inlet pipe, the diameter of the flow hole in the one of the current collectors is larger.
1. the current collectors do not need to externally regulate the flow rate and flow rate by adopting a combination of the liquid cavity, the current collector main flow channel and the flow hole in each of the current collectors, which simplifies the connection structure, so that the presence of too many branches and pipelines in the current collector system is reduced, leading to a reduction in the complexity of the pipelines;
2. the design of the flow holes makes the change of diameters of the flow holes more simple compared to the change of the diameters of the current collector primary flow channels, avoiding the problem of low adaptability of the assembly caused by different diameters of the main collector channel, and meanwhile, the design of the flow holes makes the entire current collector system more compact, leading to a reduction in the space occupation;
3. by adjusting the diameters of the flow holes of different current collectors in the current collector system, it is possible to flexibly change the flow rate and flow allocation of the liquid in different current collectors, and the direct relationship between the diameters of the flow holes and the flow rate makes the flow allocation more accurate compared to controlling the flow rate by changing the diameters and lengths of the current collector primary flow channels;
4. the design of the flow holes leads to a reduction in potential leakage points in the current collector system, and the structure of the current collector system is simpler and leads to a reduction in the risk of leakage compared to the design of a complex connection path; and
5. by adjusting the diameters of the flow holes, the flow rate of the liquid flowing from the current collector primary flow channels to the current collector connection ports are allowed to be effectively controlled. In addition, according to Bernoulli's equation, changes in flow rate also cause changes in pressure, so that the pressure distribution may be indirectly controlled by adjusting the flow holes.

### BRIEF DESCRIPTION OF THE DRAWINGS

Fig. 1 shows a schematic diagram of a three-dimensional structure of a current collector system according to an embodiment of the present disclosure;
Fig. 2 shows a schematic diagram of the three-dimensional structure of a current collector according to an embodiment of the present disclosure;
Fig. 3 shows a schematic structural diagram of the current collector illustrating a current collector connection port according to an embodiment of the present disclosure; and
Fig. 4 shows a schematic diagram illustrating a sectional structure of the current collector according to an embodiment of the present disclosure.

The meanings of the labels in the accompanying drawings are as follows: 1 current collector housing, 11 liquid cavity, 12 current collector connection port, 2 current collector primary flow channel, 21 primary flow channel inlet, 22 primary flow channel outlet, 3 flow hole, 4 transition cavity, 41 flow regulating cavity, 42 cavity, 43 flow allocation rib, 5 stepped part.

### DETAILED DESCRIPTION

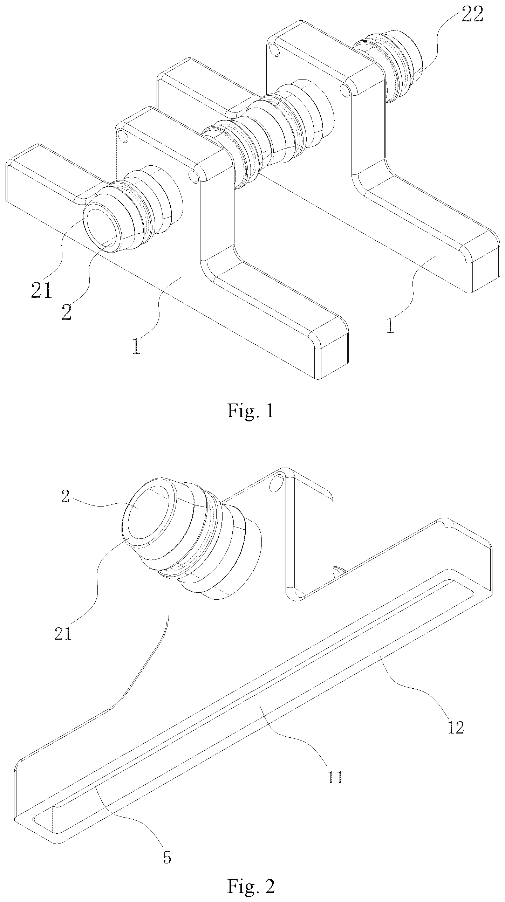

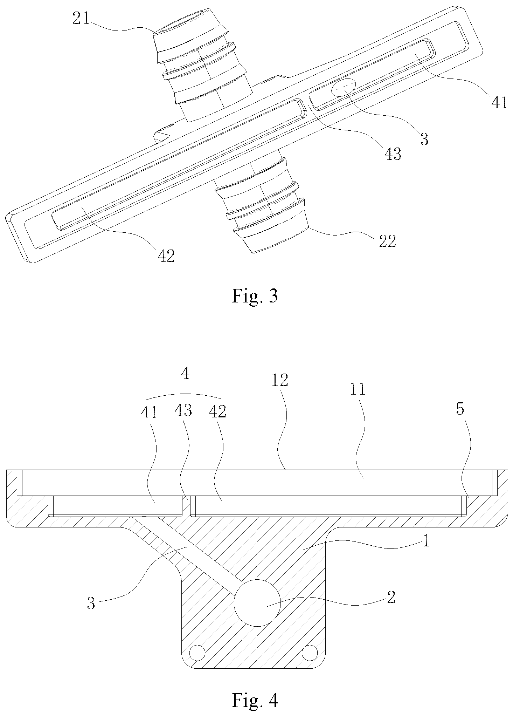

A first embodiment of the present disclosure is shown with reference to Figs. 1 to 4. Disclosed is a current collector system, including at least two current collectors. Each of the current collectors includes a current collector housing 1 and a current collector primary flow channel 2. The current collector primary flow channel 2 penetrates through the current collector housing 1. The current collector primary flow channel 2 is perpendicular to the current collector housing 1. The current collector housing 1 is provided with a liquid cavity 11 for liquid circulation. A side of the liquid cavity 11, i.e., a side of the current collector housing 1, is provided with an open current collector connection port 12, which is configured to be in sealed communication with a liquid cooling plate, and another side of the liquid cavity 11 is in communication with the current collector primary flow channel 2 through a flow hole 3. Two ends of the current collector primary flow channel 2 include a primary flow channel inlet 21 and a primary flow channel outlet 22. The primary flow channel inlet 21 may be configured to inlet cooling liquid into the liquid cavity 11. The primary flow channel outlet 22 may be configured to outlet the cooling liquid from the liquid cavity 11. In the at least two current collectors, the primary flow channel inlet 21 is in communication with the primary flow channel outlet 22 of the adjacent current collector to realize a serial connection in sequence. A diameter of the flow hole 3 is smaller than that of the primary flow channel inlet 21, and the diameter of the flow hole 3 of each of the at least two the current collectors is not the same, so that the flow rate and the pressure flowing from the flow hole 3 into the liquid cavity 11 are capable of being regulated by changing the diameter of the flow hole 3 in the different current collectors. Thereby, the diameter of the flow hole 3 in each of the current collectors may be changed according to locations of the current collectors, so that the velocity of the liquid flowing out of the current collector connection port 12 of each of the current collectors is the same.

In the first embodiment, a diameter of the flow hole 3 is in a range of 0.5 mm to 5 mm, which is able to precisely control flow volume of the liquid. A suitable diameter may be selected to ensure that the flow volume of the liquid reaches a predetermined requirement according to an actual demand, thereby realizing a precise control of the flow volume. The primary flow channel inlet 21 is coaxial with the primary flow channel outlet 22, and a diameter of the current collector primary flow channel 2 between the two is in a range of 6 mm to 14 mm. The coaxial design of the primary flow channel inlet 21 and the primary flow channel outlet 22 ensures that the liquid in the current collector primary flow channel 2 is able to maintain a stable flow direction, reduces eddy currents and turbulence phenomena generated by the change of direction, helps to reduce the energy loss, and improves the fluid conveying efficiency, and the dimensions of the current collector primary flow channel 2 enable easy machining for manufacturing and integrated installation. The current collector housings 1, by designing a combination of the liquid cavity 11, the main flow channel and the flow hole 3 in each of the current collector housings 1 and by providing flow holes 3 with different diameters in different collector housings 1, lead to a reduction in the number of liquid cooling branches and pipelines for regulating the flow volume in the liquid cooling system, thereby simplifying the complexity of a structure based on the flow allocation, and enabling to improve the even heat transfer effect in the liquid cooling plates.

In some implementations, in order to regulate the flow allocation by the current collectors, a transition cavity 4 may be provided between the flow hole 3 and the liquid cavity 11, a stepped part 5 in a stepped transition is provided between the transition cavity 4 and the liquid cavity 11, a liquid flow area of the flow hole 3 is smaller than a liquid flow area of the transition cavity 4, and the liquid flow area of the transition cavity 4 is smaller than a liquid flow area of the liquid cavity 11. A flow allocation rib 43 is further provided within the transition cavity 4, and the flow allocation rib 43 separates the transition cavity 4 into a flow regulating cavity 41 and a cavity 42. Similarly, the liquid flow area of the flow hole 3 is smaller than the liquid flow area of the flow regulating cavity 41, and the liquid flow area of the flow regulating cavity 41 is smaller than the liquid flow area of the liquid cavity 11. In at least two of the current collectors, there are at least two flow allocation ribs 43 positioned differently, leading to a change in the flow distribution of the liquid at different flow rate and a change in the flow rate when the liquid flows through regions with different flow areas. Since the flow hole 3 has the smallest flow area, the flow rate of the liquid will be relatively high when it passes through the flow hole 3, while in the liquid cavity 11 and the flow regulating cavity 41, the flow rate will be relatively low due to the relatively large flow area, which helps to minimize the pressure loss and energy consumption resulting from the excessively fast flow rate.

A side of the flow regulating cavity 41 is in communication with the flow hole 3, and another side of the flow regulating cavity 41 is in communication with the liquid cavity 11. The design of the flow regulating cavity 41 is capable of regulating and controlling the flow rate of the liquid. An ideal flow rate distribution is allowed to be realized when the liquid flows through the region by reasonably designing the shape and size of the flow regulating cavity 41, thereby avoiding problems caused by too fast or too slow flow rate. The setting of the stepped portion 5 may make the internal structure of each of the current collectors more reasonable and easy to process. In addition, the flow rate and flow distribution may more flexibly controlled by gradually reducing the flow area, improving the performance of the current collector. In the first embodiment, in a side wall of the flow regulating cavity 41 at the side of flow regulating cavity 41 in communication with the flow hole 3, a width of the side wall is not smaller than a diameter of the flow hole 3, and a length of the side wall is in a range of 10 mm to 50 mm. In this way, sufficient space and time are provided for the liquid to flow, allowing the flow rate to be gradually regulated and distributed within the flow regulating cavity 41.

It should be noted that a thickness of each of the flow allocation ribs 43 separating the flow regulating cavity 41 and cavity 42 is in a range of 1 mm to 5 mm. The flow allocation rib 43 having the moderate thickness is capable of withstanding a certain amount of liquid pressure and impact without being too bulky or occupying too much space. It makes the structure of each of the current collectors more stable and reduces performance degradation caused by structural deformation or damage.

In order to facilitate improving the stability and sealing of the connection between the current collector connection port 12 and the ends of the liquid cooling plates, a distance from a face of the liquid cavity 11 connected to the flow regulating cavity 41 to a face where the current collector connection port 12 is located is controlled to be in a range of 3 mm to 7 mm, so that the current collectors may not be too large, and an installation position may also be reserved, which is conducive to assemble the liquid cooling plates, and improves the sealing and stability of the assembly.

The present disclosure further relates to a liquid cooling system, including a liquid cooling main inlet pipe, a liquid cooling main outlet pipe, one or more liquid cooling plates and a current collector system, the liquid cooling plates are stacked in sequence and spaced apart, each of two ends of the liquid cooling plates are in sealed connection with the current collector connection port 12 of corresponding one of the current collectors, i.e., one of the two ends of the liquid cooling plates is in sealed connection with the current collector connection port 12 of one of the current collectors and the other of the two ends of the liquid cooling plates is in sealed connection with the current collector connection port of another of the current collectors. In each two adjacent current collectors, the primary flow channel inlet 21 of one of the current collectors is connected to the primary flow channel outlet 22 of the adjacent current collector. The liquid cooling main inlet pipe is connected to the current collector primary flow channel 2 at an end of the one or more liquid cooling plates stacked, and the liquid cooling main outlet pipe is connected to the current collector primary flow channel 2 at another end of the one or more liquid cooling plates stacked. The liquid cooling plate close to the current collector main inlet pipe is defined as an initial end and the liquid cooling plate away from the current collector main outlet pipe is defined as a tag end. Therefore, the current collector main inlet pipe is connected to the current collector primary flow channel inlet 21 at an end of the liquid cooling plate of the initial end, the liquid cooling main outlet pipe is connected to the primary flow channel outlet 22 of the current collector at another end of the liquid cooling plate of the initial end, and in the current collectors respectively located at the two ends of the liquid cooling plate of the tag end, the current collector primary flow channel outlet 22 needs to be blocked. When one of the current collectors is further away from the liquid cooling main inlet pipe and the liquid cooling main outlet pipe, the diameter of the flow hole 3 in the one of the current collectors is larger. That is, the diameters of the flow holes 3 in the current collectors connected to the liquid cooling plates become larger from the initial end to the tag end. In this way, the liquid cooling system is able to efficiently transfer the heat from a heat source to the cooling liquid, and the liquid cooling system achieves the precise control of the flow rate by allowing the diameter of the flow hole 3 in the collector housing 1 further away from the liquid cooling main inlet pipe to be smaller. This design ensures an even distribution of the cooling liquid at different locations and avoids differences in cooling effect due to the uneven flow volume.

It should be noted that, in some implementations, the change in the diameters of the flow holes 3 in different current collectors in the above liquid cooling system may be replaced with a change in the number of the flow holes 3, which also achieves the effect of changing the flow rate.

The working principle of the current collectors is specified in detail based on the above liquid cooling system. When the cooling liquid in the liquid cooling main inlet pipe flows into the liquid cooling plate where the initial end is located, there is almost no loss of cooling liquid in the primary flow channel inlet 21 at the end of the liquid cooling plate, so that the cooling liquid pressure will be higher and the flow rate will be faster, and therefore, when the diameter of the flow hole 3 in the current collector connected to the liquid cooling plate where the initial end is located is selected to be 0.5 mm, the flow rate of the cooling liquid into the liquid cooling plate is faster but the flow volume thereof is smaller. When the cooling liquid in the liquid cooling main inlet pipe flows into the liquid cooling plate where the tag end is located, the cooling liquid in the primary flow channel inlet 21 at the end of the liquid cooling plate is subject to the friction of the current collector primary flow channel 2 along its own length, which will result in the lowering of the pressure and the slowing down of flow rate of the cooling liquid, and therefore, when the diameter of the flow hole 3 in the current collector connected to the liquid cooling plate of the tag end is selected to be 5 mm, the cooling liquid enters into the liquid cooling plate with a slower flow rate but a larger flow volume, so that the total flow volume of the cooling liquid within the current collector at the end of the liquid cooling plate where the initial end is located are roughly equal to that of the cooling liquid within the current collector at the end of the liquid cooling plate where the tag end is located, thereby ensuring consistent heat transfer from each of the liquid cooling plates. This design is intended to compensate for the reduced flow rate due to the friction in the liquid cooling system and to ensure that each of the liquid cooling plates receives the proper amount of cooling liquid.

It should be noted that in the current collectors between the liquid cooling plates where the initial end and the tag end are located, the diameters of the flow holes 3 are selected to increase layer by layer from the initial end to the tag end, and the incremental amount can be adaptively adjusted according to the number of rows of a battery, and when the number of rows of a battery is relatively great, the diameters of the flow holes 3 may be selected in a range of less than 0.5 mm or greater than 5 mm, which is not specifically limited in the present embodiment.

In summary, a current collector system and a liquid cooling system provided by the present application have the following technical effects:
1. the current collectors do not need to externally regulate the flow rate and flow rate by adopting a combination of the liquid cavity 11, the current collector main flow channel 2 and the flow hole 3 in each of the current collectors, which simplifies the connection structure, so that the existence of too many branches and pipelines in the current collector system is avoided, leading to a reduction in the complexity of the pipelines;
2. the design of the flow holes 3 makes the change of diameters of the flow holes 3 more simple compared to the change of the diameters of the current collector primary flow channels 2, avoiding the problem of low adaptability of the assembly caused by different diameters of the main collector channel 2, and meanwhile, the design of the flow holes 3 makes the entire current collector system more compact, leading to a reduction in the space occupation;
3. by adjusting the diameters of the flow holes 3 of different current collectors in the current collector system, it is possible to flexibly change the flow rate and flow allocation of the liquid in different current collectors, and the direct relationship between the diameters of the flow holes 3 and the flow rate makes the flow allocation more accurate compared to controlling the flow rate by changing the diameters and lengths of the current collector primary flow channels 2;
4. the design of the flow holes 3 leads to a reduction in potential leakage points in the current collector system, and the structure of the current collector system is simpler and leads to a reduction in the risk of leakage compared to the design of a complex connection path; and
5. by adjusting the diameters of the flow holes 3, the flow rate of the liquid flowing from the current collector primary flow channels 2 to the current collector connection ports 12 are allowed to be effectively controlled. In addition, according to Bernoulli's equation, changes in flow rate also cause changes in pressure, so that the pressure distribution may be indirectly controlled by adjusting the flow holes 3.

## Claims

1. A current collector system, comprising at least two current collectors, each of the current collectors comprising:
a current collector housing (1), provided with a liquid cavity (11) for liquid circulation, a side of the liquid cavity (11) being provided with an open current collector connection port (12);
a current collector primary flow channel (2), penetrating through the current collector housing (1), wherein the current collector primary flow channel (2) of each of the at least two current collectors is connected in series with each other; and
a flow hole (3), provided between the liquid cavity (11) and the current collector primary flow channel (2) to allow the current collector primary flow channel (2) to be in communication with the liquid cavity (11);
wherein a diameter of the flow hole (3) of each of the at least two current collectors is not equal.

2. The current collector system according to claim 1, wherein a transition cavity (4) is provided between the flow hole (3) and the liquid cavity (11), a stepped part (5) in a stepped transition is provided between the transition cavity (4) and the liquid cavity (11), a liquid flow area of the flow hole (3) is smaller than a liquid flow area of the transition cavity (4), and the liquid flow area of the transition cavity (4) is smaller than a liquid flow area of the liquid cavity (11).

3. The current collector system according to claim 2, wherein a flow allocation rib (43) is provided within the transition cavity (4), the flow allocation rib (43) separates the transition cavity (4) into a flow regulating cavity (41) and a cavity (42), a side of the flow regulating cavity (41) is in communication with the flow hole (3), and another side of the flow regulating cavity (41) is in communication with the liquid cavity (11), wherein in at least two of the current collectors, there are at least two flow allocation ribs (43) positioned differently.

4. The current collector system according to claim 3, wherein the liquid flow area of the flow hole (3) is smaller than the liquid flow area of the flow regulating cavity (41), and the liquid flow area of the flow regulating cavity (41) is smaller than a liquid flow area of the liquid cavity (11).

5. The current collector system according to claim 3, wherein a thickness of each of the flow allocation ribs (43) separating the flow regulating cavity (41) and cavity (42) is in a range of 1 mm to 5 mm.

6. The current collector system according to claim 3, wherein in a side wall of the flow regulating cavity (41) at the side of flow regulating cavity (41) in communication with the flow hole (3), a width of the side wall is not smaller than a diameter of the flow hole (3), and a length of the side wall is in a range of 10 mm to 50 mm.

7. The current collector system according to claim 3, wherein a distance from a face of the liquid cavity (11) connected to the flow regulating cavity (41) to a face where the current collector connection port (12) is located is in a range of 3 mm to 7 mm.

8. The current collector system according to any one of claims 1 to 6, wherein a diameter of the flow hole (3) is in a range of 0.5 mm to 5 mm.

9. The current collector system according to any one of claims 1 to 6, wherein a diameter of the current collector primary flow channel (2) is in a range of 6 mm to 14 mm.

10. A liquid cooling system, comprising a liquid cooling main inlet pipe, a liquid cooling main outlet pipe, one or more liquid cooling plates and a current collector system according to any one of claims 1 to 9, wherein the liquid cooling plates are stacked in sequence and spaced apart, each of two ends of the liquid cooling plates is in sealed connection with the current collector connection port (12) of one of the current collectors, the liquid cooling main inlet pipe is connected to the current collector primary flow channel (2) at an end of the one or more liquid cooling plates stacked, and the liquid cooling main outlet pipe is connected to the current collector primary flow channel (2) at another end of the one or more liquid cooling plates stacked, wherein when one of the current collectors is further away from the liquid cooling main inlet pipe, the diameter of the flow hole 3 in the one of the current collectors is larger.
